# EUROPÄISCHE PATENTSCHRIFT

(11) **EP 3 568 730 B1**
(45) Veröffentlichungstag und Bekanntmachung des Hinweises auf die Patenterteilung: **03.02.2021**
(21) Anmeldenummer: 17832765.6
(22) Anmeldetag: 15.12.2017
(51) Int. Cl.: G05B 19/4065, B21B 37/16, B21B 38/10, G05B 19/418

(54) **ÜBERWACHUNG UND STEUERUNG EINES FRÄSVORGANGS**
MONITORING AND CONTROL OF A MILLING OPERATION
SURVEILLANCE ET COMMANDE D'UNE OPÉRATION DE FRAISAGE

(30) Priorität: 13.01.2017 DE 102017000290
(43) Veröffentlichungstag der Anmeldung: 20.11.2019
(73) Patentinhaber: Mühlbauer GmbH & Co. KG, 93426 Roding (DE)
(72) Erfinder: PICL, Alexander, 93142 Maxhuette-Haidhof (DE); AUGST, Uwe Franz, 92442 Wackersdorf (DE); STENGL, Franz, 92540 Altendorf-Fronhof (DE); NIKLAS, Sigmund, 93199 Zell (DE)
(74) Vertreter: Schmidt, Steffen J.
(86) Internationale Anmeldenummer: PCT/EP2017/083019
(87) Internationale Veröffentlichungsnummer: WO 2018/130372

(56) Entgegenhaltungen:
- WO-A1-92/13652
- DE-A1-102010 015 659
- US-A- 4 979 556
- US-A1- 2002 070 478

## Beschreibung

### Technisches Gebiet

Hier sind eine Überwachung und Steuerung eines Fräsvorgangs beschrieben, sowie ein System und ein Verfahren zu deren Ausführung.

### Hintergrund

Wert- und Sicherheitsdokumente werden heute häufig bis auf Personalisierungsdaten zentral gefertigt und anschließend dezentral, zum Beispiel auf Meldestellen, bei Behörden oder in Unternehmen, die zur Ausstellung derartiger Wert- und Sicherheitsdokumente berechtigt sind, mit einer Personalisierung versehen. Bei der Personalisierung werden den jeweiligen Inhaber des Wert- und Sicherheitsdokumentes individuell bezeichnende Text-, Zahlen- und/oder Bilddaten (zum Beispiel Name und Anschrift des Inhabers, Geburtsdatum, Geburtsort, Foto des Inhabers, biometrische Daten des Inhabers, etc.) in das Wert- und Sicherheitsdokument eingetragen. Diese Text-, Zahlen- und/oder Bilddaten sind von einem Betrachter unmittelbar lesbar. Zunehmend werden auch Transpondereinheiten in Wert- und Sicherheitsdokumente eingesetzt. Dies ermöglicht ein berührungsloses und automatisiertes Auslesen von auf einem Chip der Transpondereinheit gespeicherten Daten. Hierzu umfasst die Transpondereinheit eine Antenne und ein den Chip aufweisendes Chipmodul, welche auf einem Trägersubtrat angeordnet sind. Die Antenne ist mit dem Chipmodul elektrisch leitend verbunden. Die Antenne kann dabei als Antennenspule, als Monopol- oder als Dipolantenne oder dergleichen realisiert sein. Diese unterschiedlichen Antennenvarianten sind nachfolgend allgemein als Antennenstrukturen bezeichnet.

### Stand der Technik

Bei der Herstellung der Antennenstrukturen wird zum Beispiel aus einer auf einem isolierenden (Kunststoff-)Träger laminierten (Aluminium-, Kupfer-, oder dergl.) Metallschicht die gewünschte geometrische Gestalt der Antenne mit einem gesteuerten Fräswerkzeug herausgefräst. Dabei wird von einer Vorratsrolle die laminierte Bahn aus Träger plus Metallschicht durch einen Frässpalt zwischen einem strukturierten Cliche und einem Fräszylinder geführt. Das Cliche hat ein Muster aus Erhebungen und Vertiefungen. Teile der Metallschicht werden, dem Muster des Cliche entsprechend, gezielt mit dem Fräszylinder von der Trägerschicht abgetragen. Dabei werden das Cliche und die laminierte Bahn kontrolliert relativ zum Fräszylinder weitertransportiert, wodurch sich die gewünschte Gestalt der Antennenstruktur ergibt.

Zur Kontrolle des fertigen Fräsergebnisses überwachen Sensoren die Gestalt der Antenne und koppeln der Steuerung des Fräskopfes ein Signal zurück. Die Frässpaltbreite kann durch diese Rückkopplung und entsprechende Führung des Fräswerkzeugs nachgeregelt werden. Aufgrund der räumlichen Distanz zwischen dem Eingriffsort des Fräswerkzeugs und der Überwachung der Gestalt der fertigen Antennenstruktur erfolgt eine Erkennung, ob die Antennenstruktur korrekt hergestellt wurde, oft zu spät. Eine korrigierende Nacharbeit der Antennenstruktur ist in der Regel nicht möglich. Folglich führen fehlerhaft gefräste Antennenstrukturen zu einer erhöhten Ausschussrate.

Vor diesem Hintergrund wird das zuverlässigere Fertigen von Antennen für Smart-Label-Anwendungen oder Etiketten mit weniger auftretenden Schlechtteilen während der Herstellung der Antennen angestrebt.

Die DE102010015659 betrifft ein Verfahren zur Ausstattung eines Folienmaterials mit einer elektrisch leitfähigen Leiterstruktur.

### Zugrundeliegendes Problem

Daher besteht die Aufgabe, fehlerhafte Fräsergebnisse bei der Herstellung von Antennenstrukturen zu verringern oder ganz vermeiden.

### Vorgeschlagene Lösung

Zur Lösung wird eine Vorrichtung zur Überwachung und Steuerung eines Fräsvorgangs eines mit einem Cliche zusammenwirkenden Fräsers gemäß Patentanspruch 1 vorgeschagen. Dabei ist der Fräser dazu eingerichtet, an einer einen Träger und eine Metallschicht aufweisenden, nachgiebigen Ware wenigstens eine Antennenstruktur aus der Metallschicht herauszufräsen, während die Ware durch einen Frässpalt zwischen dem Fräser und dem Cliche hindurchgeführt wird. Dazu umfasst die Vorrichtung einen Licht-Sende/ Empfänger zum Abgeben und Empfangen eines den Frässpalt in oder quer zu einer Verlaufsrichtung der Ware durchstreichenden Lichtstreifen. Der Lichtstreifen kann so orientiert und dimensioniert, und der Fräser und das Cliche so angeordnet sein, dass der Fräser und das Cliche den Lichtstreifen zumindest an einem seiner beiden Längsränder abschatten, bevor der Licht-Empfänger den Lichtstreifen empfängt. Der Lichtstreifen ist damit in einer seiner beim Licht-Empfänger eintreffenden Querabmessung für die Breite des Frässpalts zwischen dem Fräser und dem Cliche charakteristisch. Der Licht-Empfänger kann dazu eingerichtet sein, ein die Breite des Frässpalts wiedergebendes Signal an eine Steuerung auszugeben. Die Steuerung kann dazu eingerichtet sein, ein Stellsignal zumindest an einen, die Breite des Frässpalts zwischen dem Fräser und dem Cliche beeinflussenden Stellantrieb auszugeben.

Insbesondere im Dauerbetrieb mit hohem Durchsatz kann mit einer solchen Anordnung auch die auftretende Thermodrift des Fräsers kompensiert werden; somit bleiben auch die Abmaße der Antennenstruktur konstant.

Die Vorrichtung kann dazu eingerichtet sein, als Ware ein von einer ersten Rolle auf eine zweite Rolle geführtes Band zu verarbeiten. Die Vorrichtung kann alternativ dazu eingerichtet sein, einen von einem ersten Stapel zu einem zweiten Stapel geführten Bogen zu verarbeiten.

Ein Cliche ist eine mit Erhebungen und Vertiefungen versehene Vorlage für die Antennenstruktur. Das Cliche kann aus Zink, Kupfer, Kunststoff, Aluminium oder Magnesium, Kunststoff, Stahlband, Vollstahl oder Keramik hergestellt sein oder auch aus einem mehrschichtigen Verbund der genannten Materialien bestehen; für höhere Standzeiten kann es mit einer (galvanischen) Oberflächenvergütung versehen sein. Bei der Herstellung des Cliches werden durch Materialabtrag die Bereiche entfernt, an denen bei der mit dem Cliche zu realisierenden Antennnenstruktur das Metall stehen bleiben soll.

Alternativ können auch fotografische Herstellungsverfahren zur Herstellung des Cliches verwendet werden. Ein Photopolymer-Cliche hat drei Schichten: eine Trägerplatte z.B. aus Stahl, eine Photopolymerschicht (und eine transparente Schutzschicht aus Kunststoff). Das Photopolymer härtet unter UV-Licht. So kann unbelichtetes Monomer-Material leicht ausgewaschen werden; belichtetes, vernetztes Polymer-Material ist nicht mehr löslich/auswaschbar. Die später erhabenen Bereiche des Cliches werden belichtet. Mit einer optionalen Rückseitenbelichtung kann die Unterseite des Cliches ausgehärtet werden. Die nicht erhabenen Bereiche werden ausgewaschen.

Alternativ wird Laserdirektgravur zur Herstellung des Cliches genutzt. Dabei trägt ein Laserstrahl die nicht erhabenen Bereiche von dem Cliche ab. Dazu fährt der von einem Computer gesteuerte Laserstrahl das auf einen Zylinder aufgezogene, rotierende Cliche ab und lässt die erhabenen Bereiche stehen.

Der Fräser und das Cliche können in einer Variante als zylindrische Walzen oder Rollen realisiert sein, die unter Bildung des Frässpalts parallel zueinander, um ihre Längsachse rotierbar angeordnet sind. Um den Frässpalt in seiner Breite (= Abstand zwischen Fräser und Cliche) zu verändern, sind die Stellantriebe vorgesehen, mit denen die Distanz des Fräsers und/oder des Cliches zueinander variiert werden kann. Dabei ist die Anordnung so getroffen, dass das Verstellen des Abstands zwischen Fräser und Cliche deren parallele Ausrichtung zueinander nicht beeinflusst. Das Cliche kann im Betrieb der Vorrichtung an einer Trommel oder Walze magnetisch oder klebend befestigt sein.

Der Licht-Sender/Empfänger kann dazu ausgebildet sein, ein die Position des Fräsers und/oder eine thermische Ausdehnung des Fräsers und/oder des Cliches während eines Betriebs der Vorrichtung zu erfassen. Dazu liefert der Licht-Sender einen Lichtstreifen aus sichtbarem oder unsichtbarem Licht. Der Licht-Empfänger ist zu dem Licht-Sender so ausgerichtet, dass der Licht-Empfänger eine geometrische Veränderung des Lichtstreifens durch Hindernisse entlang des Pfades des Lichtstreifens registriert. Der Lichtstreifen kann ein im Querschnitt recht- oder mehreckiger, runder, oder elliptischer Lichtstrahl sein.

Die Steuerung kann dazu eingerichtet sein, mittels des Stellantriebs / der Stellantriebe die Position des Fräsers und/oder des Cliches zu verändern, wenn die Breite des Frässpalts zwischen dem Fräser und dem Cliche einen vordefinierten Schwellenwert unter- oder überschreitet.

Die Breite des Frässpalts zwischen dem Fräser und dem Cliche kann sich aus einem kürzesten Abstand eines Flugkreises der Schneiden des Fräsers zu einem Grund des Cliches (=vertiefter Bereich des Cliches) ergeben.

Eine Spanabsaugeinrichtung kann bei dem Fräser angeordnet und dazu eingerichtet sein, durch den Fräser aus der Metallschicht herausgefräste Metallspäne abzusaugen, so dass diese den den Frässpalt durchstreichenden Lichtstreifen möglichst wenig beeinträchtigen.

Weiterhin enthält die Lösung ein Verfahren zur Überwachung und Steuerung eines Fräsvorgangs eines mit einem Cliche zusammenwirkenden Fräsers gemäß Patentanspruch 8. Das Verfahren kann folgende Schritte haben: Herausfräsen wenigstens einer Antennenstruktur an einer einen Träger und eine Metallschicht aufweisenden, nachgiebigen Ware aus der Metallschicht, während die Ware durch einen Frässpalt zwischen dem Fräser und dem Cliche hindurchgeführt wird; Abgeben eines den Frässpalt in oder quer zu einer Verlaufsrichtung der Ware durchstreichenden Lichtstreifens durch einen Licht-Sender, wobei der Lichtstreifen so dimensioniert, und der Fräser und das Cliche so anzuordnen sind, dass der Fräser und das Cliche den Lichtstreifen zumindest an einem seiner beiden Längsränder abschatten, bevor ein Licht-Empfänger den Lichtstreifen empfängt, wobei eine Querabmessung des Lichtstreifens für die Breite des Frässpalts zwischen dem Fräser und dem Cliche charakteristisch ist; und Ausgeben eines die Breite des Frässpalts wiedergebenden Signals durch den Licht-Empfänger an eine Steuerung; und Ausgeben eines Stellsignals zumindest an einen, die Breite des Frässpalts zwischen dem Fräser und dem Cliche beeinflussenden Stellantrieb.

Das durch den Licht-Empfänger ausgegebene Signal kann entweder die Breite des Frässpalts, die Position des Fräsers oder die Position des Cliches enthalten, wobei das die Breite des Frässpalts enthaltende Signal eine Differenz aus der Position des Fräsers und der Position des Cliches enthält (Relativposition), oder das die Position des Fräsers enthaltende Signal eine Absolutposition des Flugkreises des Fräsers bezogen auf eine Sensormitte oder einen Sensorrand des Licht-Empfängers enthält, oder das die Position des Cliches enthaltende Signal eine Absolutposition des Grunds des Cliches bezogen auf eine Sensormitte oder einen Sensorrand des Licht-Empfängers enthält.

Der den Frässpalt in oder quer zu einer Verlaufsrichtung der Ware durchstreichende Lichtstreifen schließt mit einer Oberfläche oder einer Querachse der (bahnförmigen) Ware - in bzw. quer zu deren Verlaufsrichtung betrachtet - einen Winkel zwischen 10° und 170° ein.

Die hier vorgestellte Vorrichtung / das Verfahren hat den Vorteil, die Geometrie und insbesondere eine Kontur der Antennenstruktur auf dem Träger besonders dicht am Ort des Fräsens kontrollieren zu können und sehr dicht an der Soll-Geometrie, der Soll-Kontur zu halten. Ferner kann auch die Dicke der Antennenstruktur am Ort des Fräsens kontrolliert werden.

Der Licht-Sender/Empfänger kann als Lichtbandmikrometer ausgebildet sein, und Position des Fräsers und/oder des Cliches, und/oder die thermische Ausdehnung des Fräsers und/oder des Cliches während des Betriebs erfassen. Der Licht-Sender/Empfänger kann Positionsänderungen < 1 µm erfassen.

Wenn die Position des Fräsers von einer relativ zu dem Träger vorgegebenen Soll-Position derart abweicht, dass ein vordefinierter Schwellenwert überschritten wird, kann die Verarbeitungseinheit ausgebildet sein, dem Stellmotor ein Korrektursignal zu liefern, um die Position des Fräsers relativ zu dem Träger zu korrigieren.

Der Stellantrieb kann ausgebildet sein, basierend auf dem Korrektursignal, den Fräser und/oder das Cliche so zu bewegen, dass die Position des Fräsers relativ zu dem Cliche in Richtung der Soll-Position korrigiert wird. Dies hat den Vorteil, im Betrieb des Fräsers, Positionsänderungen direkt zu erfassen und ohne zeitliche oder räumliche Verzögerung, dieser Veränderung über den Stellantrieb entgegenzuwirken.

Die Position des Fräsers kann sich aus einem Abstand einer Fräserkante oder dem Flugkreis der Schneidkanten des Fräsers zu einem von dem Licht-Sender/Empfänger (Lichtbandmikrometer) definierten Punkt ergeben. Die Fräserkante kann ein Punkt sein, von dem sich ein kürzester Abstand zwischen dem Fräser und dem Cliche ergibt.

Der Licht-Sender/Empfänger / das Lichtbandmikrometer kann so angeordnet sein, dass eine Querrichtung des Lichtbands senkrecht zu einer Verlaufsrichtung des Trägers verläuft.

Auch wenn einige der voranstehend beschriebenen Aspekte in Bezug auf das Verfahren beschrieben wurden, so können diese Aspekte auch auf die Vorrichtung zutreffen. Genauso können die voranstehend in Bezug auf die Vorrichtung beschriebenen Aspekte in entsprechender Weise auf das Verfahren zutreffen.

### Kurzbeschreibung der Zeichnungen

Weitere Ziele, Merkmale, Vorteile und Anwendungsmöglichkeiten ergeben sich aus der nachfolgenden Beschreibung von nicht einschränkend zu verstehenden Ausführungsbeispielen mit Bezug auf die zugehörigen Zeichnungen. Dabei zeigen alle beschriebenen und/oder bildlich dargestellten Merkmale für sich oder in beliebiger Kombination den hier offenbarten Gegenstand, auch unabhängig von ihrer Gruppierung in den Ansprüchen oder deren Rückbeziehungen. Die Abmessungen und Proportionen der in den Figuren gezeigten Komponenten sind hierbei nicht unbedingt maßstäblich; sie können bei zu implementierenden Ausführungsformen vom hier Veranschaulichten abweichen.
- Figur 1: zeigt eine schematische seitliche Draufsicht einer Vorrichtung zur Herstellung von Antennenstrukturen aus einer auf einem isolierenden Träger laminierten Metallschicht mit einem gesteuerten Fräswerkzeug mit einer Überwachung des Fräsvorgangs.
- Figur 2: zeigt einen vergrößerten Ausschnitt des mit dem Cliche zusammenwirkenden Fräsers und der zugehörigen Steuerung zur Überwachung des Fräsvorgangs.
- Figur 3: zeigt eine vergrößerte schematische Draufsichtsdarstellung des mit dem Cliche zusammenwirkenden Fräsers, von dem Licht-Sender gegen die Förderrichtung der bandförmigen Ware gesehen.

Die hier beschriebenen Verfahrensvarianten der Vorrichtung sowie deren Funktions- und Betriebsaspekte dienen lediglich dem besseren Verständnis ihrer Struktur, Funktionsweise und Eigenschaften; sie schränken die Offenbarung nicht etwa auf die Ausführungsbeispiele ein. Die Figuren sind teilweise schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Dabei kann jede Funktionsweise, jedes Prinzip, jede technische Ausgestaltung und jedes Merkmal, welches/welche in den Figuren oder im Text offenbart ist/sind, mit allen Ansprüchen, jedem Merkmal im Text und in den anderen Figuren, anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen den beschriebenen Vorrichtungen zuzuordnen sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Figuren umfasst und können zum Gegenstand weiterer Ansprüche gemacht werden. Auch die Ansprüche limitieren nicht die Offenbarung und damit die Kombinationsmöglichkeiten aller aufgezeigten Merkmale untereinander. Alle offenbarten Merkmale sind explizit auch einzeln und in Kombination mit allen anderen Merkmalen hier offenbart.

### Detaillierte Beschreibung

In den Figuren sind einander entsprechende oder funktionsähnliche Bauteile mit übereinstimmenden Bezugszeichen versehen. Das Verfahren und die Vorrichtung werden nun anhand von Ausführungsbeispielen beschrieben.

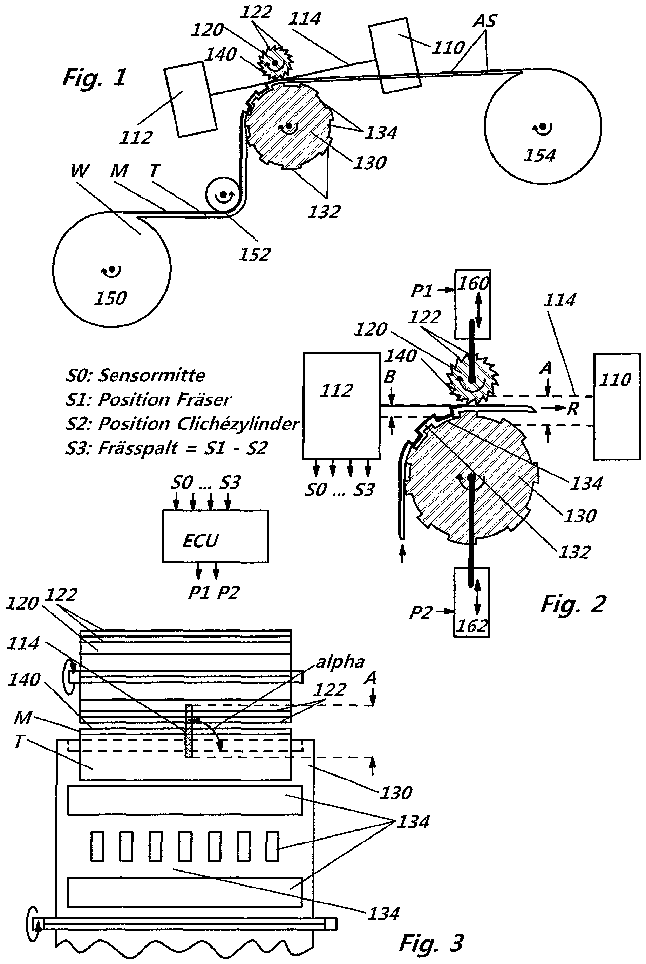

Die Figuren 1 und 2 zeigen eine schematische seitliche Draufsicht einer Vorrichtung 100 zur Herstellung von Antennenstrukturen aus einer auf einem isolierenden Träger T laminierten Metallschicht M mit einem gesteuerten Fräswerkzeug mit einer Überwachung des Fräsvorgangs. Dieser Träger ist in einem Beispiel ein PET-Lage mit vorzugsweise 35 - 36 µm Dicke, auf die eine Aluminiumschicht mit 9 µm Dicke aufgewalzt ist. Die Aluminiumschicht kann zumindest teilflächig mit dem Träger T mittels einer Klebeschicht verbunden sein. Der Träger T mit der Metallschicht M ist in der hier gezeigten Variante als quasi endlose bandförmige Ware W ausgestaltet. In einer Ausführungsform kann die Metallschicht M auch eine Kupfer enthaltende Schicht sein und eine Dicke von 15 - 40 µm, vorzugsweise 25 - 35 µm aufweisen.

Die Vorrichtung 100 hat für den Fräsvorgang einem mit einem Cliché 130 zusammenwirkenden Fräser 120. Der Fräser 120 hat eine Walzenform mit parallel zu seiner Mittellängsachse verlaufenden Schneidkanten 122. Das hier ebenfalls walzenförmig gestaltete Cliche 130, welches parallel zu dem Fräser 120 und im Abstand zu diesem angeordnet ist, bildet zusammen mit dem Fräser 120 einen im Querschnitt rechteckigen Frässpalt 140. Dieser Frässpalt 140 ist in weiter unten beschriebener Weise veränderbar. Der Fräser 120 ist mittels eines - nicht weiter veranschaulichten - Fräsantriebs um seine Mittellängsachse in Rotation (ca. 800 - 1000 upm) zu versetzen. Das Cliche 130 ist ebenfalls mittels eines - nicht weiter veranschaulichten - Clicheantriebs um seine Mittellängsachse in Rotation zu versetzen.

Von einer Vorratsrolle 150 wird die endlose Ware W über eine Umlenkrolle 152 in einer Verlaufsrichtung R dem Frässpalt 140 zwischen dem Cliche 130 und dem Fräser 120 zugeführt. Während die Ware W durch den Frässpalt 140 zwischen dem Fräser 120 und dem Cliche 130 hindurchgeführt wird, trägt der Fräser 120 gezielt Bereiche der Metallschicht M ab um die Antennenstruktur AS auf dem Träger T auszuformen. Dabei ist die Ware W so unter Zugspannung gehalten, dass sie sich um die Erhebungen 132 und in die Vertiefungen 134 des Cliches 130 schmiegt. Die von den Erhebungen 132 des Cliches 130 den Schneidkanten 122 des Fräsers 120 dargebotenen Bereiche der Metallschicht M werden von den Schneidkanten 122 so abgetragen, dass der unter der Metallschicht M liegende Träger T nicht oder kaum beeinträchtigt wird. Die aus dem Frässpalt 140 in der Verlaufsrichtung R austretende Ware W wird auf eine Produktrolle 154 aufgewickelt.

Auf der Waren-Austrittsseite des Frässpalts 140 (näher an der Produktrolle 154) ist ein Licht-Sender 110 zum Abgeben eines den Frässpalt 140 durchstreichenden Lichtstreifens 114 vorgesehen. Dieser Lichtstreifen 114 wird auf der Waren-Eintrittsseite des Frässpalts 140 (näher an der Vorratsrolle 150) von einem Lichtempfänger 112 aufgenommen und in weiter unten detailliert erläuterter Weise ausgewertet. Der Lichtstreifen 114 hat in der hier veranschaulichten Variante eine rechteckige Querschnittsform, die unter einem rechten Winkel alpha (siehe Figur 3) senkrecht von einer Oberfläche der Ware W - hier der Metallschicht-Oberfläche - orientiert ist. Die Querabmessung des Lichtstreifens 114 auf der Waren-Eintrittsseite des Frässpalts 140 nachdem der Lichtstreifen 114 den Frässpalt 140 passiert hat, ist für die Breite des Frässpalts 140 zwischen dem Fräser 120 und dem Cliche 130 charakteristisch.

Der Sende/Licht-Empfänger 110, 112 kann durch ein Lichtbandmikrometer realisiert sein. Der Sender 110 ist dabei ausgebildet, den Lichtstreifen 114 zu erzeugen. Basierend auf dem Lichtstreifen 114 wird in einer Verlaufsrichtung des Trägers eine Position des Fräsers 120 relativ zu einem von dem Lichtbandmikrometer definierten (Mittel-)Punkt bestimmt. Dieser (Mittel-)Punkt ist das Zentrum des Empfängersensors. Diese Position des (Mittel-)Punkts wird von dem Licht-Empfänger 112 als numerischer Wert S0 ausgegeben. Basierend auf der Position des Fräsers 120 wird dann von der Steuerung ECU der Fräsvorgang überwacht. Der Licht-Empfänger 112 wertet die Querabmessung des Lichtstreifens 114 aus um ein die Breite des Frässpalts 140 wiedergebendes Signal S1...S3 an die Steuerung ECU auszugeben.

Die Vorrichtung 100 hat ferner zwei Stellantriebe 160, 162 die mit der Steuerung ECU verbunden sind.

Die Stellantriebe 160, 162 sind zum einen an dem Fräser 120 und zum anderen an dem Cliche 130 angebracht. Dadurch lässt sich eine relative Position, die Frässpaltbreite zwischen Fräser 120 und Cliche 130 einstellen.

Mit dem Lichtbandmikrometer 110 lässt sich die Position des Fräsers 120 relativ zum Cliche 130 und eine thermische Ausdehnung des Fräsers 120 während des Betriebs des Fräsers 120 erfassen. Weicht die Position des Fräsers 120 von einer vorgegebenen Soll-Position ab, sodass ein vordefinierter Schwellenwert überschritten wird, liefert die Steuerung ECU den Stellantriebe 160, 162 entsprechende Korrektursignale P1, P2, worauf die Position des Fräsers 120 relativ zu dem Cliche 130 korrigiert wird. Hierbei wird entweder der Fräser 120, das Cliche 130 oder beide relativ zueinander verschoben, um die Position des Fräsers relativ zu dem Cliche 130 in Richtung der Soll-Position zu korrigieren. Dabei ergibt sich die Position des Fräsers 120 aus einem Abstand einer Fräserkante des Fräsers 120 zu einem von dem Lichtbandmikrometer 110 definierten Punkt. Dieser definierte Punkt kann in einem vorgegebenen Mittelpunkt des Lichtbandmikrometers liegen. Dabei wird die Fräserkante als Endpunkt angesehen, von dem sich ein kürzester Abstand zwischen dem Fräser 120 und dem Träger ergibt. Hier wird der Flugkreis der Schneidkanten 122 des Fräsers 120 als Endpunkt erfasst. Anfangs- und Endpunkt ergeben sich aus einer Oberfläche des Cliches 130 beziehungsweise den Schneidkanten 122 des Fräsers 120. Anfangspunkt und Endpunkt bilden dann einen kürzesten Abstand zwischen Fräser und Träger. Zusätzlich kann das Lichtbandmikrometer nicht nur mit der Steuerung ECU verbunden sein, sondern diese auch enthalten, um eine kompaktere Bauweise zu schaffen. Die Verarbeitungseinheit überwacht hierbei während einer Fräsoperation des Fräsers 120 die Position des Fräsers 120. Eine spezielle Anordnung sieht vor, dass der Fräser unterhalb des Cliches 130 angeordnet ist. In Figur 1 ist eine Anordnung gezeigt, bei der der Fräser 120 oberhalb des Cliches 130 angeordnet ist. Somit kann in einer Ausführungsform auch der Fräser 120 von unten an das Cliche 130 herangeführt werden, um die Fräsoperation auszuführen.

Das Verfahren zum Überwachen eines Fräsvorgangs umfasst ein Erzeugen eines Lichtstreifens durch ein Lichtbandmikrometer. Ferner umfasst das Verfahren ein Bestimmen durch das Lichtbandmikrometer, in einer Verlaufsrichtung des Trägers, einer Position eines Fräsers relativ zu einem von dem Lichtbandmikrometer definierten Punkt, basierend auf dem Lichtstreifen. Im nächsten Schritt wird die Position des Fräsers einschließlich einer thermischen Ausdehnung des Fräsers und/oder des Cliches während des Betriebs erfasst. Ein Überwachen des Fräsvorgangs durch eine Verarbeitungseinheit basiert auf der ermittelten Position des Fräsers. Das Überwachen der Position des Fräsers erfolgt während einer Fräsoperation des Fräsers direkt am Fräsort. Ein Verändern der Position des Fräsers relativ zu dem Cliche - und damit der Breite des Frässpalts - durch entsprechende Stellantriebe basiert auf dem Überwachen des Fräsvorgangs. Die Breite des Frässpalts zwischen dem Fräser und dem Cliche ergibt sich aus einem kürzesten Abstand eines Flugkreises der Schneiden des Fräsers zu einem Grund des Cliches. Das Verändern umfasst ein Korrigieren der Position des Fräsers relativ zu dem Cliche, wenn die Position des Fräsers von einer relativ zu dem Cliche vorgegebenen Soll-Position derart abweicht, dass ein vordefinierter Schwellenwert überschritten wird. Der Schwellenwert kann durch einen Betrag eines Abstands von der Soll-Position bestimmt sein. Bei einer bestimmten Abweichung beziehungsweise bei einem Überschreiten des Betrags, wird die aktuelle Position, die von der Soll-Position abweicht, so nachgeregelt, dass eine zukünftige Position die Soll-Position zumindest näherungsweise annimmt. Das Verändern umfasst auch ein Bewegen des Fräsers und/oder des Clichés, basierend auf einem von der Steuerung an die Stellantriebe gelieferten Korrektursignal, so dass die Position des Fräsers relativ zu dem Cliche in Richtung der Soll-Position korrigiert wird. Durch Verfahren des Stellantriebs an dem Fräser und/ oder dem Cliche kann somit die Position des Fräsers relativ zu dem Cliche eingestellt werden.

Mit einer in den Figuren nicht weiter veranschaulichten Spanabsaugeinrichtung bei dem Fräser können durch den Fräser aus der Metallschicht herausgefräste Metallspäne abgesaugt werden. So können diese Metallspäne den den Frässpalt durchstreichenden Lichtstreifen beim Auftreffen auf den Licht-Empfänger möglichst wenig abschatten und dadurch das Messergebnis beeinträchtigen.

Das Herausfräsen einer fortlaufenden Folge von Antennenstrukturen an einer einen Träger und eine Metallschicht aufweisenden, nachgiebigen Ware aus der Metallschicht, während die Ware durch den Frässpalt zwischen dem Fräser und dem Cliche hindurchgeführt wird, erfolgt durch Abgeben eines den Frässpalt in oder quer zu einer Verlaufsrichtung der Ware durchstreichenden Lichtstreifens durch einen Licht-Sender. Der Lichtstreifen ist so angeordnet und dimensioniert, und der Fräser und das Cliché sind so anzuordnen, dass der Fräser und das Cliche den Lichtstreifen) zumindest an einem seiner beiden Längsränder abschatten. Auf der vor dem Frässpalt liegenden Seite (bei dem Lichtsender) hat der Lichtstreifen die Breite zwischen den Pfeilen "A". Auf der nach dem Frässpalt liegenden Seite (bei dem Lichtempfänger) hat der Lichtstreifen die Breite zwischen den Pfeile "B". Wenn der Licht-Empfänger den Lichtstreifen empfängt, ist dessen Querabmessung für die Breite des Frässpalts charakteristisch. Die mit dem Licht-Empfänger verbundene Steuerung erhält von dem Licht-Empfänger ein die Breite des Frässpalts wiedergebendes Signal S1...S3. Die Steuerung gibt dann entsprechende Stellsignale P1, P2 an die die Breite des Frässpalts beeinflussenden Stellantriebe. Das durch den Licht-Empfänger ausgegebene Signal S1...S3 enthält entweder die Breite des Frässpalts, die Position des Fräsers oder die Position des Clichés. Das die Breite des Frässpalts enthaltende Signal enthält eine Differenz aus der Position des Fräsers und der Position des Cliches, oder das die Position des Fräsers enthaltende Signal enthält eine Absolutposition des Flugkreises des Fräsers bezogen auf eine Sensormitte des Licht-Empfängers, oder das die Position des Cliches enthaltende Signal enthält eine Absolutposition des Grunds des Cliches bezogen auf eine Sensormitte des Licht-Empfängers enthält.

## Patentansprüche

1. Fräs-Vorrichtung (100) zur Herstellung von Antennenstrukturen aus einer auf einem isolierenden Träger (T) laminierten Metallschicht (M) mit
- einem gesteuerten Fräser (120) und mit
- einer Steuerung (ECU) eingerichtet zur Überwachung und Steuerung des Fräsvorgangs des mit einem Cliche (130) zusammenwirkenden Fräsers (120), wobei
- der Fräser (120) dazu eingerichtet ist, an einer den Träger (T) und die Metallschicht (M) aufweisenden, nachgiebigen Ware (W) wenigstens eine Antennenstruktur (AS) aus der Metallschicht (M) herauszufräsen, während die Ware (W) durch einen Frässpalt (FS) zwischen dem Fräser (120) und dem Cliche (130) hindurchgeführt wird, die Vorrichtung (100) umfassend:
einen Licht-Sender/Empfänger (110, 112) eingerichtet zum Abgeben und Empfangen eines den Frässpalt (FS) in oder quer zu einer Verlaufsrichtung (R) der Ware (W) durchstreichenden Lichtstreifens (114), wobei eine Querabmessung des Lichtstreifens (114) für die Breite des Frässpalts (140) zwischen dem Fräser (120) und dem Cliche (130) charakteristisch ist, und wobei der Licht-Empfänger (112) dazu eingerichtet ist, ein die Breite des Frässpalts (FS) wiedergebendes Signal (S1...S3) an die Steuerung (ECU) auszugeben, und wobei die Steuerung (ECU) dazu eingerichtet ist, ein Stellsignal (P1, P2) zumindest an einen, die Breite des Frässpalts (140) zwischen dem Fräser (120) und dem Cliche (130) beeinflussenden Stellantrieb (160, 162) auszugeben.

2. Vorrichtung (100) nach Anspruch 1, wobei der Lichtstreifen (LS) so orientiert und dimensioniert, und der Fräser (120) und das Cliche (130) so anzuordnen sind, dass der Fräser (120) und das Cliche (130) den Lichtstreifen (114) zumindest an einem seiner beiden Längsränder abschatten, bevor der Licht-Empfänger (112) den Lichtstreifen (114) empfängt.

3. Vorrichtung (100) nach Anspruch 1 oder 2, wobei die Ware (W) ein von einer ersten Rolle (150) der Fräs-vorrichtung (100) auf eine zweite Rolle (154) der Fräs-vorrichtung (100) geführtes Band ist.

4. Vorrichtung (100) nach einem der vorangegangenen Ansprüche, wobei der Licht-Sender/Empfänger (110, 112) dazu ausgebildet ist, eine Position des Fräsers (120) und/oder eine thermische Ausdehnung des Fräsers (120) und/ oder eine Position des Clichés (130) während eines Betriebs der Vorrichtung (100) zu erfassen.

5. Vorrichtung (100) nach einem der vorhergehenden Ansprüche, wobei die Steuerung (ECU) dazu eingerichtet ist, die Position des Fräsers (120) und/oder des Cliches (130) zu verändern, wenn ein vordefinierter Schwellenwert der Breite des Frässpalts (140) zwischen dem Fräser (120) und dem Cliche (130) unter- oder überschritten wird.

6. Vorrichtung (100) nach einem der vorangegangenen Ansprüche, wobei die Breite des Frässpalts (140) zwischen dem Fräser (120) und dem Cliche (130) sich aus einem kürzesten Abstand eines Flugkreises der Schneiden (122) des Fräsers (120) zu einem Grund (132) des Cliches (130) ergibt.

7. Vorrichtung (100) nach einem der vorhergehenden Ansprüche, wobei eine Spanabsaugeinrichtung bei dem Fräser (120) angeordnet und dazu eingerichtet ist, durch den Fräser (120) aus der Metallschicht (M) herausgefräste Metallspäne abzusaugen, so dass diese den den Frässpalt (FS) durchstreichenden Lichtstreifen (LS) möglichst wenig beeinträchtigen.

8. Verfahren zur Überwachung und Steuerung eines Fräsvorgangs zur Herstellung von Antennenstrukturen eines mit einem Cliche (130) zusammenwirkenden Fräsers (120), mit den Schritten:
- Bereitstellen einer Fräs-Vorrichtung (100) mit
-- einem gesteuerten Fräser (120) und einem mit diesem zusammenwirkenden Cliché (130), und mit
-- einer Steuerung (ECU) zur Überwachung und Steuerung des Fräsvorgangs des mit einem Cliche (130) zusammenwirkenden Fräsers (120),
- Herausfräsen wenigstens einer Antennenstruktur (AS) an einer einen Träger (T) und eine Metallschicht (M) aufweisenden, nachgiebigen Ware (W) aus der Metallschicht (M), während die Ware (W) durch einen Frässpalt (114) zwischen dem Fräser (120) und dem Cliche (130) hindurchgeführt wird,
- Abgeben eines den Frässpalt (140) in oder quer zu einer Verlaufsrichtung der Ware (W) durchstreichenden Lichtstreifens (114) durch einen Licht-Sender (110), wobei der Lichtstreifen (114) so dimensioniert, und der Fräser (120) und das Cliche (130) so anzuordnen sind, dass der Fräser (120) und das Cliche (130) den Lichtstreifen (114) zumindest an einem seiner beiden Längsränder abschatten, bevor ein Licht-Empfänger (112) den Lichtstreifen (114) empfängt, wobei dessen Querabmessung für die Breite des Frässpalts (140) zwischen dem Fräser (120) und dem Cliche (130) charakteristisch ist, und
- Ausgeben eines die Breite des Frässpalts (140) wiedergebenden Signals (S1...S3) durch den Licht-Empfänger (112) an eine Steuerung (ECU), und
- Ausgeben eines Stellsignals (P1, P2) zumindest an einen, die Breite des Frässpalts (140) zwischen dem Fräser (120) und dem Cliche (130) beeinflussenden Stellantrieb (160, 162).

9. Verfahren nach Anspruch 8, wobei das durch den Licht-Empfänger (112) ausgegebene Signal (S1...S3) entweder die Breite des Frässpalts (140), die Position des Fräsers (120) oder die Position des Cliches (130) enthält, wobei das die Breite des Frässpalts (140) enthaltende Signal eine Differenz aus der Position des Fräsers (120) und der Position des Cliches (130) enthält, oder das die Position des Fräsers (120) enthaltende Signal eine Absolutposition des Flugkreises des Fräsers (120) bezogen auf eine Sensormitte des Licht-Empfängers (112) enthält, oder das die Position des Cliches (130) enthaltende Signal eine Absolutposition des Grunds des Cliches (130) bezogen auf eine Sensormitte des Licht-Empfängers (112) enthält.

10. Verfahren nach Anspruch 8 oder 9, wobei der den Frässpalt (FS) in oder quer zu einer Verlaufsrichtung der Ware (W) durchstreichende Lichtstreifen (140) mit der Ware (W) - in bzw. quer zu deren Verlaufsrichtung betrachtet - einen Winkel (alpha) zwischen 10° und 170° einschließt.

## Claims

1. A milling device (100) for manufacturing antenna structures out of a metal layer (M) laminated on an insulating backing (T) with
- a controlled milling cutter (120) and with
- a controller (ECU) configured for monitoring and controlling the milling operation of the milling cutter (120) interacting with a die (130), wherein
- the milling cutter (120) is adapted to mill at least one antenna structure (AS) out of the metal layer (M) on a flexible product (W) having the backing (T) and the metal layer (M), while the product (W) is guided through a milling gap (FS) between the milling cutter (120) and the die (130), the device (100) comprising:
a light emitter/receiver (110, 112) configured for outputting and receiving a light strip (114) crossing the milling gap (FS) in or transversely to a running direction (R) of the product (W), wherein a transverse dimension of the light strip (114) is characteristic of the width of the milling gap (140) between the milling cutter (120) and the die (130), and wherein the light receiver (112) is adapted to output a signal (S1...S3) reproducing the width of the milling gap (FS) to the controller (ECU), and wherein the controller (ECU) is adapted to output an adjusting signal (P1, P2) at least to an adjusting drive (160, 162) that influences the width of the milling gap (140) between the milling cutter (120) and the die (130).

2. The device (100) according to Claim 1, wherein the light strip (LS) is oriented and dimensioned, and the milling cutter (120) and the die (130) are intended to be arranged, so that the milling cutter (120) and the die (130) shadow the light strip (114) at least at one of its two longitudinal edges, before the light receiver (112) receives the light strip (114).

3. The device (100) according to Claim 1 or 2, wherein the product (W) is a band guided from a first roller (150) of the milling device (100) to a second roller (154) of the milling device (100).

4. The device (100) according to any one of the previous claims, wherein the light emitter/receiver (110, 112) is formed to detect a position of the milling cutter (120) and / or a thermal expansion of the milling cutter (120) and / or a position of the die (130) during operation of the device (100).

5. The device (100) according to any one of the previous claims, wherein the controller (ECU) is adapted to change the position of the milling cutter (120) and / or of the die (130) if the width of the milling gap (140) between the milling cutter (120) and the die (130) falls below or exceeds a predefined threshold value.

6. The device (100) according to any one of the previous claims, wherein the width of the milling gap (140) between the milling cutter (120) and the die (130) results from a shortest distance of a circular motion of the blades (122) of the milling cutter (120) to a base (132) of the die (130).

7. The device (100) according to any one of the previous claims, wherein a chip extraction device is arranged on the milling cutter (120) and is adapted to extract the metal chips milled by the milling cutter (120) out of the metal layer (M), so that these adversely affect the light strip (LS) crossing through the milling gap (FS) as little as possible.

8. A method for monitoring and controlling a milling operation for the manufacture of antenna structures of a milling cutter (120) interacting with a die (130), with the steps:
- providing a milling device (100) with
- a controlled milling cutter (120) and a die (130) interacting with this, and with
- a controller (ECU) for monitoring and controlling the milling operation of the milling cutter (120) interacting with a die (130),
- milling of at least one antenna structure (AS) out of the metal layer (M) on a flexible product (W) having a backing (T) and a metal layer (M), while the product (W) is guided through a milling gap (114) between the milling cutter (120) and the die (130);
- outputting of a light strip (114) crossing through the milling gap (140) in or transversely to a running direction of the product (W) by a light emitter (110), wherein the light strip (114) is dimensioned, and the milling cutter (120) and the die (130) are intended to be arranged, so that the milling cutter (120) and the die (130) shadow the light strip (114) at least at one of its two longitudinal edges before a light receiver (112) receives the light strip (114), wherein its transverse dimension is characteristic of the width of the milling gap (140) between the milling cutter (120) and the die (130), and
- outputting of a signal (S1...S3) reproducing the width of the milling gap (140) by the light receiver (112) to a controller (ECU), and
- outputting of an adjusting signal (P1, P2) at least to an adjusting drive (160, 162) that influences the width of the milling gap (140) between the milling cutter (120) and the die (130).

9. The method according to claim 8, wherein the signal (S1...S3) output by the light receiver (112) contains the width of the milling gap (140), the position of the milling cutter (120) or the position of the die (130), wherein the signal containing the width of the milling gap (140) contains a difference of the position of the milling cutter (120) and the position of the die (130), or the signal containing the position of the milling cutter (120) contains an absolute position of the circular motion of the milling cutter (120) with regard to a sensor center of the light receiver (112), or the signal containing the position of the die (130) contains an absolute position of the base of the die (130) with regard to a sensor center of the light receiver (112).

10. The method according to claim 8 or 9, wherein the light strip (140) crossing through the milling gap (FS) in or transversely to a running direction of the product (W) encloses with the product (W) - viewed in or transversely to its running direction - an angle (alpha) between 10° and 170°.

## Revendications

1. Dispositif de fraisage (100) pour produire des structures d'antenne à partir d'une couche de métal (M) laminée sur un support isolant (T), comportant
- une fraise commandée (120), et comportant
- une unité de commande (ECU) conçue pour surveiller et commander le processus de fraisage de la fraise (120) coopérant avec un cliché (130), dans lequel
- la fraise (120) est conçue pour fraiser au moins une structure d'antenne (AS) dans la couche de métal (M) sur un article flexible (W) comprenant le support (T) et la couche de métal (M), tandis que l'article (W) est transporté à travers une fente de fraisage (FS) entre la fraise (120) et le cliché (130), le dispositif (100) comprenant :
un émetteur/récepteur de lumière (110, 112) conçu pour émettre et recevoir une bande lumineuse (114) traversant la fente de fraisage (FS) dans ou transversalement à une direction de défilement (R) de l'article (W), dans lequel une dimension transversale de la bande lumineuse (114) est caractéristique de la largeur de la fente de fraisage (140) entre la fraise (120) et le cliché (130), et dans lequel le récepteur de lumière (112) est conçu pour délivrer un signal (S1...S3) reflétant la largeur de la fente de fraisage (FS) à l'unité de commande (ECU), et dans lequel l'unité de commande (ECU) est conçue pour délivrer un signal de réglage (P1, P2) au moins à un organe de réglage (160, 162) influençant la largeur de la fente de fraisage (140) entre la fraise (120) et le cliché (130).

2. Dispositif (100) selon la revendication 1, dans lequel la bande lumineuse (LS) est orientée et dimensionnée de telle sorte que la fraise (120) et le cliché (130) doivent être disposés de telle sorte que la fraise (120) et le cliché (130) occultent la bande lumineuse (114) au moins sur l'un de ses deux bords longitudinaux avant que le récepteur de lumière (112) ne reçoive la bande lumineuse (114).

3. Dispositif (100) selon la revendication 1 ou 2, dans lequel l'article (W) est une bande guidée d'un premier rouleau (150) du dispositif de fraisage (100) sur un deuxième rouleau (154) du dispositif de fraisage (100).

4. Dispositif (100) selon l'une des revendications précédentes, dans lequel l'émetteur/récepteur de lumière (110, 112) est conçu pour détecter une position de la fraise (120) et/ou une dilatation thermique de la fraise (120) et/ou une position du cliché (130) pendant un fonctionnement du dispositif (100).

5. Dispositif (100) selon l'une des revendications précédentes, dans lequel l'unité de commande (ECU) est conçue pour modifier la position de la fraise (120) et/ou du cliché (130) lorsqu'une valeur seuil prédéfinie de la largeur de la fente de fraisage (140) entre la fraise (120) et le cliché (130) est dépassée vers le bas ou vers le haut.

6. Dispositif (100) selon l'une des revendications précédentes, dans lequel la largeur de la fente de fraisage (140) entre la fraise (120) et le cliché (130) résulte d'une distance la plus courte entre un cercle de coupe des arêtes de coupe (122) de la fraise (120) et un fond (132) du cliché (130).

7. Dispositif (100) selon l'une des revendications précédentes, dans lequel un dispositif d'aspiration des copeaux est disposé au niveau de la fraise (120) et est conçu pour aspirer les copeaux métalliques fraisés dans la couche de métal (M) par la fraise (120), afin que ceux-ci affectent le moins possible la bande lumineuse (LS) traversant la fente de fraisage (FS).

8. Procédé de surveillance et de commande d'un processus de fraisage pour produire des structures d'antenne d'une fraise (120) coopérant avec un cliché (130), comprenant les étapes de :
- fournir un dispositif de fraisage (100) comportant
-- une fraise commandée (120) et un cliché (130) coopérant avec celle-ci, et comporant
-- une unité de commande (ECU) pour surveiller et commander le processus de fraisage de la fraise (120) coopérant avec un cliché (130),
- fraiser au moins une structure d'antenne (AS) sur un article flexible (W) comprenant un support (T) et une couche de métal (M) dans la couche de métal (M), tandis que l'article (W) est transporté à travers une fente de fraisage (114) entre la fraise (120) et le cliché (130),
- émettre une bande lumineuse (114) traversant la fente de fraisage (140) dans ou transversalement à une direction de défilement de l'article (W) par un émetteur de lumière (110), la bande lumineuse (114) étant dimensionnée de telle sorte et la fraise (120) et le cliché (130) devant être disposés de telle sorte que la fraise (120) et le cliché (130) occultent la bande lumineuse (114) au moins sur l'un de ses deux bords longitudinaux avant qu'un récepteur de lumière (112) ne reçoive la bande lumineuse (114), sa dimension transversale étant caractéristique de la largeur de la fente de fraisage (140) entre la fraise (120) et le cliché (130), et
- délivrer un signal (S1...S3) reflétant la largeur de la fente de fraisage (140) par le récepteur de lumière (112) à une unité de commande (ECU), et
- délivrer un signal de réglage (P1, P2) à au moins un organe de réglage (160, 162) influençant la largeur de la fente de fraisage (140) entre la fraise (120) et le cliché (130).

9. Procédé selon la revendication 8, dans lequel le signal (S1... S3) délivré par le récepteur de lumière (112) comprend soit la largeur de la fente de fraisage (140), soit la position de la fraise (120), soit la position du cliché (130), dans lequel le signal comprenant la largeur de la fente de fraisage (140) comprend une différence entre la position de la fraise (120) et la position du cliché (130), ou le signal comprenant la position de la fraise (120) comprend une position absolue du cercle de coupe de la fraise (120) par rapport à un centre de capteur du récepteur de lumière (112), ou le signal comprenant la position du cliché (130) comprend une position absolue du fond du cliché (130) par rapport à un centre de capteur du récepteur de lumière (112).

10. Procédé selon la revendication 8 ou 9, dans lequel la bande lumineuse (140) traversant la fente de fraisage (FS) dans ou transversalement à une direction de défilement de l'article (W) forme avec l'article (W) - vu dans ou transversalement à sa direction de défilement - un angle (alpha) compris entre 10° et 170°.
